# EUROPEAN PATENT APPLICATION

(11) **EP 4 789 914 A1**
(43) Date of publication of application: **12.08.2026**
(21) Application number: 25156148.6
(22) Date of filing: 06.02.2025
(51) Int. Cl.: B60P 1/52

(54) **CARGO SPACE FLOOR MODULE**

(71) Applicant: Modul-System HH AB, 431 49 Mölndal (SE)
(72) Inventor: CARLSSON, Anders, 431 49 Mölndal (SE)
(74) Representative: AWA Sweden AB

(57) **Abstract**

The disclosure relates to a floor module for a cargo space of a road vehicle, the floor module comprising: at least one beam supporting a plurality of roll or ball transfer units, each roll or ball transfer unit comprising a rotatable body, each rotatable body defining a respective load contact interface, wherein the load contact interfaces are arranged in a first plane; and a floor unit, wherein the floor unit forms a surface intended to face said cargo space of the road vehicle, the surface extending in a second plane; wherein the at least one beam is movable relative the floor unit between a first position corresponding to a deactivated state of the floor module and a second position corresponding to an activated state of the floor module; and wherein in the first position, the first plane is arranged relative to the second plane such that the surface of the floor unit is configured to support a load arranged on the floor module, and wherein in the second position, the first plane is arranged relative to the second plane such that at least some of the respective load contact interfaces of the rotatable bodies are configured to engage with a load arranged on the floor module for facilitating displacement of the load.

## Description

### Field of the disclosure

The disclosure relates to floor modules for cargo spaces of road vehicles. The disclosure also relates to systems and vehicles comprising such floor modules.

### Technical Background

Loading and unloading cargo spaces of road vehicles, in particular trucks, is not only time consuming, but physically demanding. Often, the heavy-lifting may be alleviated by hand trolleys. However, access to hand trolleys is often limited, resulting in reduced capacity for loading/unloading. Further, hand trolleys may be difficult to maneuver in the cargo space, and use thereof may still involve challenging physical operations, such as pivoting the load.

Hence, there is a need for a solution which improves efficiency and safety, while reducing the physical demand, of the loading and unloading processes.

### Summary of the disclosure

It is an object of the present disclosure to alleviate at least some of the aforementioned issues by providing a floor module for a cargo space of a road vehicle which facilitates displacement of a loads. This and other objects which will be evident from the following description is achieved by a floor module having the features defined in claim 1.

According to a first aspect of the present disclosure, a floor module for a cargo space of a road vehicle is provided, the floor module comprising: at least one beam supporting a plurality of roll or ball transfer units discretely arranged along a longitudinal axis of the beam, each roll or ball transfer unit comprising a rotatable body, each rotatable body defining a respective load contact interface, wherein the load contact interfaces are arranged in a first plane; and a floor unit, the floor unit extending substantially parallel with the longitudinal axis of the at least one beam and extending on both lateral sides of one beam of the at least one beam, wherein the floor unit forms a surface intended to face said cargo space of the road vehicle, the surface extending in a second plane; wherein the at least one beam is movable relative the floor unit between a first position corresponding to a deactivated state of the floor module and a second position corresponding to an activated state of the floor module; and wherein in the first position, the first plane is arranged relative to the second plane such that the surface of the floor unit is configured to support a load arranged on the floor module, and wherein in the second position, the first plane is arranged relative to the second plane such that at least some of the respective load contact interfaces of the rotatable bodies are configured to engage with a load arranged on the floor module for facilitating displacement of the load.

Hereby, a floor module which may selectively be brought between a position in which a load is supported by a floor surface, and a position in which the load is arranged on roll or ball transfer units for easier displacement thereof, is provided. A multifunctional floor module which facilitates easier and safer displacement of a load in a cargo space of a vehicle is consequently provided.

As is known in the art, a *"roll transfer unit"* or a *"ball transfer unit"* is an element which comprises a rotatable body in the form of a roll or a ball and which is configured for facilitation of transportation of items. A roll transfer unit generally provides for transportation along one axis, whereas a ball transfer unit generally provides for omnidirectional transportation.

Within the context of the present disclosure, the term *"load'* is to be understood as any item, object, or cargo that may be transported in a cargo space of a road vehicle. That is, a load may be a package, produce, equipment, such as a power tool, furniture, etc.

Within the context of the present application, the term *"load contact interface"* is to be understood as a portion or point of the rotatable body which is, at any given instance, contacting a load or is intended to contact a load. In other words, since the rotatable body during facilitation of transportation of a load rotates, the portion which is in contact with the load changes. Consequently, a portion or point of the rotatably body which constitutes the load contact interface changes.

It is to be understood that a road vehicle may be any type of vehicle meant for use on roads, such as an automobile, a service vehicle, a light truck, or a heavy truck. Consequently, a cargo space is to be understood as any space of such vehicle which is designed to carry cargo, such as the box of a heavy truck. A cargo space of a road vehicle may also be referred to as a back space of a road vehicle.

It is to be understood that a floor module according to the present disclosure is configured and intended to be arranged on a floor of a cargo space of a road vehicle, the floor defining the cargo space. Such a floor may also be referred to as an inner floor of the road vehicle.

A floor module according to the present disclosure may have any shape or dimension. For example, the floor module may be rectangular, quadratic, triangular or polygonal. The floor module may be configured such that a set of floor modules may tesselate an inner floor of the road vehicle. For example, a floor module may be rectangular with the dimensions 1x1.5 meters. It is to be understood that a floor module may be assembled from at least two, or a plurality of, sub-modules. For example, a floor module may comprise two sub-modules which are connected to each other.

Since the deactivated state of the floor module corresponds to a first relative position of the at least one beam, and the activated state corresponds to a second position of the at least one beam, the deactivated state of the floor module may, when the floor module is installed in the cargo space, as correspond to the at least one beam being closer to an inner floor of the road vehicle than the floor unit, whereas the activated state may correspond to the at least one beam being further from the inner floor than the floor unit. In other words, in the deactivated state, the at least one beam may be arranged below the floor unit as seen relative the inner floor, whereas in the activated state, the at least one beam may be arranged above the floor unit as seen relative the inner floor.

The at least one beam may have any shape or dimensions. For example, a beam may have a rectangular, or quadratic, cross-section as seen transverse to the longitudinal axis thereof. A beam may be provided as an integral unit. Alternatively, a beam may be comprised of at least two, or a plurality of, beam segments. A beam segment may, e.g., have a substantially square or substantially rectangular shape. Alternatively, a beam segment may have a substantially cylindrical shape. That is, a beam may be provided as a set of disjoint beam segments, which segments may be arranged at a distance from each other, abutingly arranged in sequence. For example, a beam may comprise a first and a second beam segment, wherein the first and second beam segment each is provided with a respective roll or ball transfer unit, and wherein the first and second beam segment are functionally connected to each other such that they may be moved simultaneously. Optionally, one beam segment may be configured to be moved as a result of the other beam segment moving.

The at least one beam may be made of any suitable material or combination of materials, such as metal, polymeric material, or ceramic material.

That the at least one beam is movable relative the floor unit is to be understood as the at least one beam and/or the floor module being configured to move. That is, the at least one beam may be configured to move, or the floor unit may be configured to move, or the at least one beam and the floor unit may be configured to move. Preferably, the at least one beam is configured to move, such that the at least one beam is movable relative the floor unit.

The at least one beam may be movable in a direction perpendicular to the longitudinal axis and a lateral axis of the at least one beam. That is, the at least one beam may be movable in a direction which has a component being perpendicular to the longitudinal axis and a lateral axis of the at least one beam.

The at least one beam may be movable by a variety of means.

The at least one beam may be movable between the first position and the second position by means of an actuator configured to apply a force on the at least one beam.

An actuator may be any type of actuator, such as a linear actuator. The actuator may be configured to apply force a force on the at least beam in any direction. For example, the actuator may be configured to apply a force perpendicular to the longitudinal axis of the at least one beam, such that the actuator functions like a lift.

The at least one beam may be reciprocally movable along the longitudinal axis thereof, wherein the floor module further may comprise at least one elevation element, and wherein the actuator may be configured to apply a force on the at least one beam acting along the longitudinal axis thereof so as to move the at least one beam along the longitudinal axis such that the at least one beam engages the at least one elevation element, thereby bringing the at least one beam between the first position and the second position.

That is, the at least one beam moves between the first position and the second position under engagement with the at least one elevation element. Hereby, instead of directly lifting the at least one beam, the actuator may apply a force having a component along the longitudinal axis of the beam, thereby decreasing the work performed by the actuator.

That the at least one beam is reciprocally movable along the longitudinal axis is to be understood as the at least one beam being movable back and fort along the longitudinal axis.

The at least one beam may further comprise a top side and a bottom side, wherein the plurality of roll or ball transfer units may be arranged in the top side and wherein the bottom side of the at least one beam may be arranged opposite the top side and may be configured to engage the at least one elevation element.

Any part or portion of the bottom side, or any element provided to the bottom side, may be configured to engage the at least one elevation element.

Each one of the at least one elevation element may form a respective inclined surface, and wherein the at least one beam may be configured to engage each inclined surface.

Each respective inclined surface may have a linear shape. That is, the surface which the at least one beam is configured to engage may have a linear inclination.

Alternatively, each respective inclined surface may have a non-linear shape.

Hereby, the power profile of the actuator may vary. Consequently, the rate at which the at least one beam moves relative the floor unit may vary. For example, the inclination of the elevation element may be steeper in the beginning of the elevation element, i.e. at a portion of the elevation element where the at least one beam first engages when moving from the first position to the second position.

The at least one elevation element may be provided in the form of a ramp, wherein the ramp may be provided with a receptacle for releasably retaining the bottom side in the activated state.

Hereby, the at least one beam may be more securely retained in the second position, i.e. the activated state of the floor module. Hence, a more robust floor module is provided.

The at least one beam may engage the at least one elevation element in a variety of ways.

The bottom side of the at least one beam may be provided with at least one roller or wheel configured to engage a bottom section of the floor module or an inner floor of the cargo space of road vehicle.

Hereby, movement of the at least one beam along the longitudinal axis thereof may be facilitated. That is, the at least one beam may move with less friction. A bottom section of the floor module is to be understood as a section of the floor module which is configured and intended to face and/or be arranged against the inner floor of the cargo space. Hence, any roller or wheel provided on the at least one beam may be configured to contact a bottom section of the floor module, or the inner floor of the cargo space directly.

The at least one beam may be provided as a hollow body having an inverted U-shaped lateral cross-section having a web connected with a first and a second leg such that the bottom side may be formed by a respective free end of the first and second leg.

Hereby, a more lightweight solution is provided.

It is to be understood that the respective free ends of the first and second leg are arranged at a distance to each other.

The first and second leg may form an accommodation space for accommodating the at least one elevation element and an engagement element configured to engage the inclined surface of the elevation element, the engagement element being provided in the first leg or the second leg.

Hereby, the movement of the at least one beam along the longitudinal axis thereof may be more controlled. Further, a more compact solution is provided.

Both the first leg and the second leg may be provided with one or more engagement elements. An engagement element may e.g. be provided on an inner surface of the first leg or the second leg. An inner surface of the first leg or the second leg is to be understood as a surface which is facing the other leg.

The engagement element may be provided in a variety of ways.

For example, the engagement element may be provided in the form of a roller or a wheel.

The bottom side of the at least one beam and the elevation element may be provided in alternative ways.

For example, the bottom side may provided with a cut-out, wherein the cut-out is configured to accommodate the elevation element in the deactivated state.

That is, the elevation element and the cut-out may have complementary shapes.

The floor unit of the floor module may be made of or comprise any material. For example, the floor unit may be made of or comprise metal, polymeric material, ceramic material, wood, etc.

That the floor unit extends substantially parallel with the longitudinal axis of the at least one beam is to be understood that the at least one beam is arranged in parallel, or at least close to parallel, with the plane of extension of the floor unit.

That the floor unit extends on both lateral sides of a beam entails that, when the floor module is in the deactivated state, the load may rest on the surface of the floor unit in a stable manner.

To this end, the surface of the floor unit may further be provided with a friction increasing structure, such as a pattern, or a layer of material, such as rubber.

The first plane may be arranged relative to the second plane such that at least some of the respective load contact interfaces of the rotatable bodies are configured to engage with a load may be performed in a variety of ways. The floor unit may for example be provided with a longitudinal opening extending along the longitudinal axis of the at least one beam, the opening being configured to allow passage of at least some of the load contact interfaces.

Alternatively, the floor unit may be provided with a plurality of through-holes, wherein the floor module may further comprise a plurality of covers, each cover being connected to a respective one beam of the at least one beam and configured to cover a respective through-hole in the deactivated state of the floor module and configured to allow a respective load contact interface to traverse the through-hole when said beam is moving between the first position and the second position.

Hereby, the plurality of through-holes may be covered in the deactivated state of the floor module, thus preventing soiling of the roll or ball transfer units and/or the at least one beam.

If the floor unit is provided with a further cover, such as a rubber matt, such cover may in turn be provided with a plurality of through-holes.

A floor module may comprise any number of beams. Consequently, the floor module may comprise any number of elevation elements. Thus, the actuator may be configured to apply a force on a first and a second beam of the at least one beam, wherein each of the first and second beam is configured to engage a respective plurality of elevation elements, each plurality of elevation elements being arranged along the respective longitudinal axis of the corresponding beam.

According to a second aspect of the present disclosure, a floor system for a cargo space of a road vehicle is provided, the floor system comprising a plurality of floor modules according to the first aspect.

According to a third aspect of the present disclosure, a road vehicle comprising at least one floor module according to the first aspect of the disclosure is provided.

Any technical effect or benefit discussed in relation to the first aspect of the present disclosure may be applicable to the second and third aspects.

It may be noted that the use of first, second, third, fourth, fifth, etc. are mainly to be seen as labels facilitating reading and that it does not necessarily mean that there need to be all the intervening numbers of portions present. It may e.g., be noted that it is contemplated to have a design where there is a first portion, a second portion, a third portion and a fifth portion, with the fourth portion being omitted. However, to facilitate reading, we have consistently used the numbering first, second, third, fourth, etc., as labels, and in a sense based on an embodiment including all conceivable portions.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

### Brief description of the drawings

The disclosure will by way of example be described in more detail with reference to the appended schematic drawings, which shows exemplary embodiments of the disclosure, wherein:
Fig. 1 is a schematic perspective view of a plurality of floor modules according to the first aspect of the present disclosure;
Fig. 2 is a schematic perspective view of the interior of a floor module;
Fig. 3 is a schematic perspective view of a ball transfer unit and an elevation mechanism of the floor module in Fig. 2;
Fig. 4A is a schematic perspective view illustrating the ball transfer unit and the elevation mechanism of Fig. 3 when the floor module is in a deactivated state;
Fig. 4B is a schematic perspective view illustrating the ball transfer unit and the elevation mechanism of Fig. 4A when the floor module is being brought to an activated state;
Fig. 4C is a schematic perspective view illustrating the ball transfer unit and the elevation mechanism of Fig. 4A when the floor module is in the activated state; and
Fig. 5 is a schematic perspective view of a road vehicle having a plurality of floor modules arranged in a cargo space thereof.

### Detailed description of embodiments

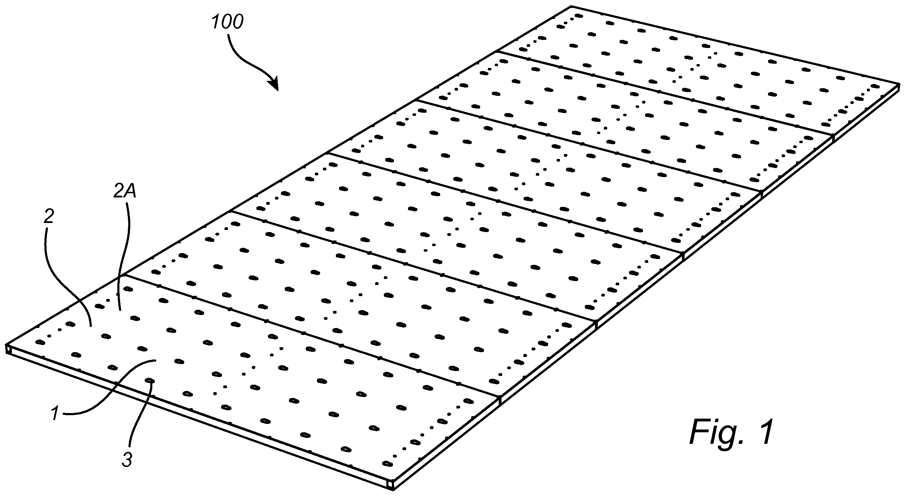

In Fig. 1, a system 100 comprising a plurality of floor modules 1 is shown. Here, the system 100 comprises six floor modules 1. Further, each floor module 1 is rectangular. However, it is to be understood that a floor module 1 according to the present disclosure may have any shape. For example, the floor module 1 may be quadratic, triangular or polygonal. Further, it is to be understood that a floor module may have any suitable dimensions. For example, a floor module 1 may be rectangular with the dimensions off 1x1.25 meters, or 1x1.5 meters, or 1x2 meters, or 1x3 meters. It is moreover to be understood that a floor module 1 may be assembled from at least two, or a plurality of, sub-modules. For example, a floor module 1 may comprise two sub-modules which are connected to each other.

The floor module 1 comprises a floor unit 2. Here, the floor unit 2 forms a surface 2A. The surface 2A is intended to face a cargo space of a road vehicle in which the floor unit may be installed. The surface 2A is a walkable surface and/or a surface on which a load may be supported. The floor unit 2 may be provided in any suitable material, such as metal, wood, polymeric material, rubber material, or any combination thereof. The floor unit 2 may, e.g., be provided in the form of a layered structure, wherein one layer is provided in a material different from a material of any other layer. For example, the floor unit 2 may comprise a wooden layer with a layer of a friction increasing material, such as rubber, provided thereon. That is, a layer of friction increasing material may be provided as a top, or an upper, layer. Hereby, a load arranged on the floor unit 2 may be less prone to sliding.

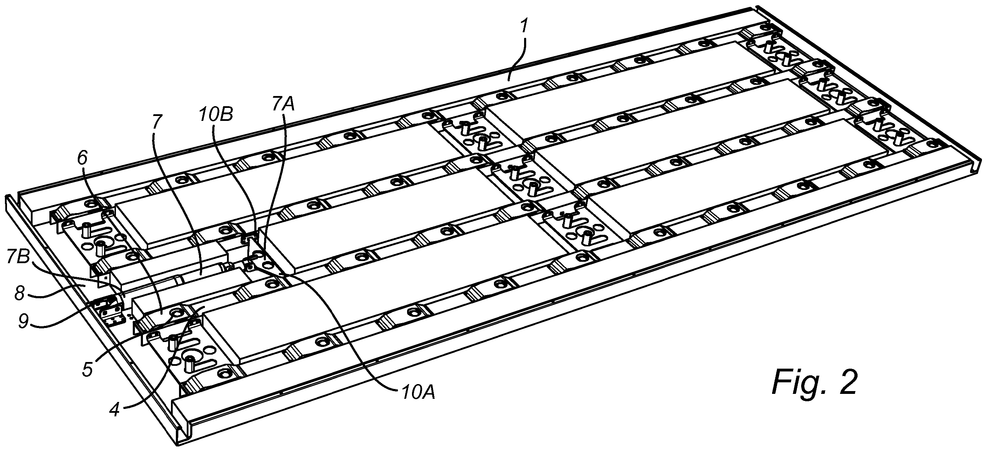

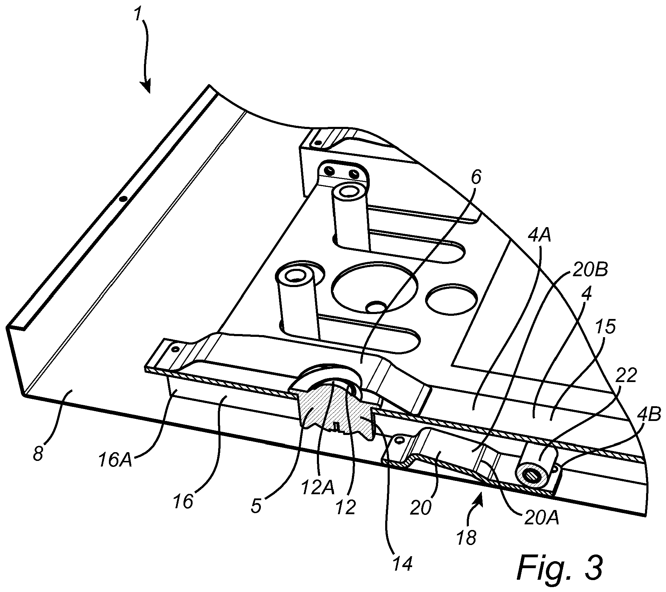

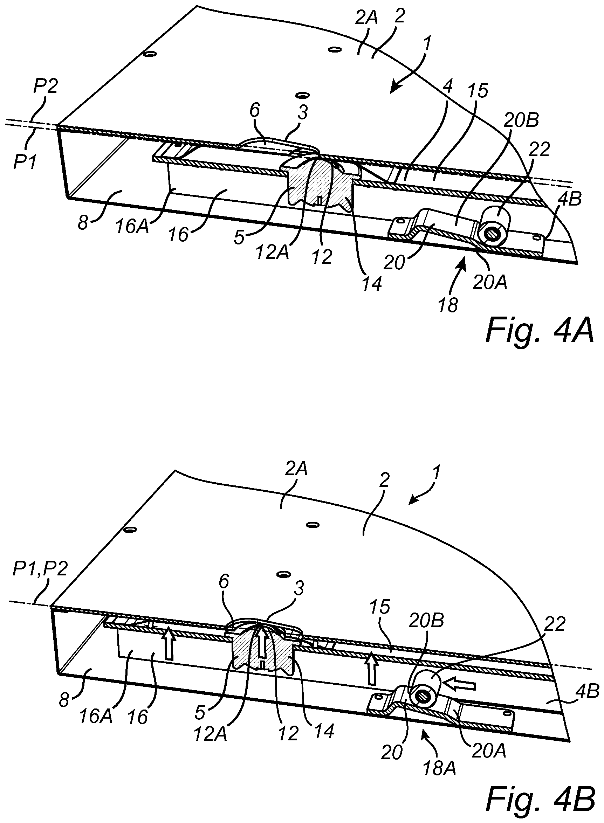

The floor unit 2 at least partially covers internal features of the floor module 1, which internal features inter alia are shown in and discussed in relation to Fig. 2. The floor unit 2 further comprises a plurality of through-holes 3, the functionality of which are described inter alia in relation to Figs. 3 and 4A-C.

Fig. 2 illustrates a floor module 1 with the floor unit 2 removed. The floor module 1 further comprises at least one beam 4 supporting a plurality of roll or ball transfer units 5 discretely arranged along a longitudinal axis of the beam 4. It is to be understood that in an assembled state, the floor unit 2 is extending on both lateral sides of at least one beam 4. Here, the beam 4 has a substantially rectangular cross-section. However, the beam 4 may have any shape or dimensions. For example, a beam 4 may have a quadratic, or polygonal, cross-section as seen transverse to the longitudinal axis thereof. A beam 4 may be provided as an integral unit. Alternatively, a beam 4 may be comprised of at least two, or a plurality of, beam segments. That is, a beam 4 may be provided as a set of disjoint beam segments, which segments may be arranged at a distance from each other, abutingly arranged in sequence. For example, a beam 4 may comprise a first and a second beam segment, wherein the first and second beam segment each is provided with a respective roll or ball transfer unit 5, and wherein the first and second beam segment are functionally connected to each other such that they may be moved simultaneously. Optionally, one beam segment may be configured to be moved as a result of the other beam segment moving.

Here, each roll or ball transfer unit 5 is a ball transfer unit. Here, there are four beams 4. Further, each beam 4 supports ten roll or ball transfer units 5. Furthermore, each roll or ball transfer unit 5 is provided with an associated cover 6, each cover 6 being connected to the respective beam 4 by which the associated roll or ball transfer unit 5 is supported.

The floor module 1 further comprises an actuator 7. The actuator 7 is configured to apply force a force on at least beam 4. Here, the actuator 7 is a linear actuator. The actuator 7 comprises a first end portion 7A and a second end portion 7B. The actuator 7 is connected at the second end portion 7B to a bottom section. Here, the second end portion 7B is connected to a bottom section 8 via a bracket. Further, the second end portion 7B is rotatably connected to the bracket 9 such that the actuator 7 may pivot in relation to the bottom section 8. However, it is to be understood that the actuator 7 may be connected to the bottom section 8 in a variety. Further, the actuator 7is connected at the first end portion 7A to at least one beam 4. Here, the actuator 7 is specifically connected to a first and a second beam 4 at a first connection point 10A and a second connection point 10B. Hereby, one actuator 7 may apply force on two beams 4 simultaneously. Further, the first and second beam 4 connected to the actuator 7 may, in turn, be connected, attached or otherwise functionally linked to and/or with further beams 4. Thus, actuation of one beam 4 by the actuator 7 may consequently actuate further beams 4. For example, in Fig. 2, all four beams 4 are functionally linked to the actuator 7, such that each beam 4 may be actuated simultaneously.

The beam 4 is reciprocally movable along a longitudinal axis thereof. Further, the beam 4 is movable relative the floor unit 2 between a first position corresponding to a deactivated state of the floor module 1 and a second position corresponding to an activated state of the floor module 1. The beam may be movable in a variety of ways and by a variety of means. For example, the actuator 7 may be configured to apply a force perpendicular to the longitudinal axis of the beam 4, such that the actuator 7 functions like a lift. Another variant is shown in and discussed in relation to Fig. 3.

In Fig. 3, a ball transfer unit 5 and an associate cover 6 is shown in further detail. The ball transfer unit 5 comprises a rotatable body 12 and an anchoring portion 14 fixing the ball transfer unit 5 to the beam 4. The rotatable body 12 defines a load contact interface 12A.

The beam 4 further comprises a top side 4A and a bottom side 4B arranged opposite the top side 4A. The ball transfer unit 5 is arranged in the top side 4A. Further, the beam 4 is here provided as a hollow body having an inverted U-shaped lateral cross-section having a web 15 connected with a first and a second leg 16. Here, for the sake of visibility, only one leg 16 is shown. The first and second leg 16 are arranges such that the bottom side 4B is formed by a respective free end 16A of the first and second leg 16. Hereby, the first and second leg 16 form an accommodation space 18.

Here, the beam 4 is movable between the first position and the second position by means of an elevation element 20 and an engagement element 22. In Fig. 3, the elevation element 20 is provided in the form of a ramp and forms an inclined surface. The engagement element 22 is provided in the form of a roller 22. The roller 22 is attached to the beam 4, specifically to a leg 16 of the beam 4. Here, the roller 22 is arranged in the accommodation space 18. Consequently, the elevation element 20 is arranged in the accommodation space 18.

As is seen in Fig. 3, the roller 22 is configured to engage the elevation element 20. That is, the roller 22 is configured to roll over the inclined surface of the elevation element 20. The roller 22 is further configured to engage the bottom section 8 of the floor module 1. Alternatively, if the floor module 1 does not comprise a bottom section 8, the roller 22 may be configured to engage an inner floor of the cargo space of a road vehicle in which the floor module 1 is installed.

In other words, bottom side 4B of the beam 4, specifically the roller 22 provided thereto, is configured to engage the elevation element 20. However, any part or portion of the bottom side 4B, or any element provided to the bottom side 4B, may be configured to engage an elevation element 20.

Here, the inclined surface is non-linear in the sense that it comprises a first section 20A and a second section 20B, wherein the first section 20A is angled in relation to the second section 20B. Here, the first section 20A is steeper in relation to the bottom section 8 of the floor module 1 than the second section 20B. The first section 20A and the second section 20B are here both shown as being linear. However, it is to be understood that the first section 20A and the second section 20B may be non-linear, e.g. curved. Furthermore, the elevation element may alternatively form an inclined, curved surface. That is, the inclined surface may be continuously curved.

By providing a non-linear inclined surface in the form of the first section 20A and the second section 20B of Fig. 3, the power profile of the actuator may vary. Consequently, the rate at which the beam 4 moves relative the floor unit 2 may vary. Here, since the inclination of the first section 20A is be steeper than the second section 20B, the power of the actuator is higher in the beginning.

The movement of the beam 4 between the first position and the second position under engagement with the elevation element 20 by the engagement element 22 is shown in Figs. 4A-C. The load contact interface 12A is arranged in a first plane P1, whereas the surface 2A of the floor unit 2, the is extending in a second plane P2.

In Fig. 4A, the floor module 1 is in the deactivated state. That is, the beam 4 is in the first position. In the first position, the first plane P1 is arranged relative to the second plane P2 such that the surface 2A of the floor unit 2 is configured to support a load arranged on the floor module 1. As can be seen in Fig. 4A, the floor unit is substantially parallel with the longitudinal axis of the beam 4. That is, the second plane P2 is substantially parallel with the longitudinal axis of the beam 4.

For illustrative purposes, the first position which the floor module 1 is, in Fig. 4A, a position where the engagement element 22 engages with the first section 20A of the elevation element 20. That is, the roller 22 has started engaging with the elevation element 20. Consequently, the through-hole 3 is in Fig. 4A partially covered by the cover 6. That is, in the deactivated state, the through-hole 3 is at least partially covered by the cover 6.

The cover 6 is connected, or attached, to the beam 4. Specifically, the cover 6 is here connected, or attached, to the web 15 of the beam. Further, the cover 6 is provided in the form of a leaf spring which is biased against the floor unit 2. Hereby, the cover 6 is pressed against the floor panel 2, thereby being abutingly arranged against the floor panel 2 in a snug manner. Hereby, the cover 6 reduces soiling of the inside of the floor panel 1, such as of the ball transfer unit 5, the beam 4 and the elevation element 20 and engagement element 22.

In Fig. 4B, the first plane P1 and the second plane P2 are substantially coinciding. That is, the beam 4 has been moved to an intermediate position between the first position and the second position. Here, the engagement element 22 engages with the second section 20B of the elevation element 20. That is, the engagement element 22 is moving from the first section 20A to the second section 20B as indicated by the left-pointing arrow, whereby the beam 4, and thus the ball transfer unit 5, is moving in a direction perpendicular to the longitudinal extension of the beam 4, as indicated by the upwards-pointing arrows.

Further, the cover 6 is still at least partially covering the through-hole 3. However, as compared to Fig. 4A, the cover 6 here merely covers a minority of the cross-sectional area of the through-hole 3.

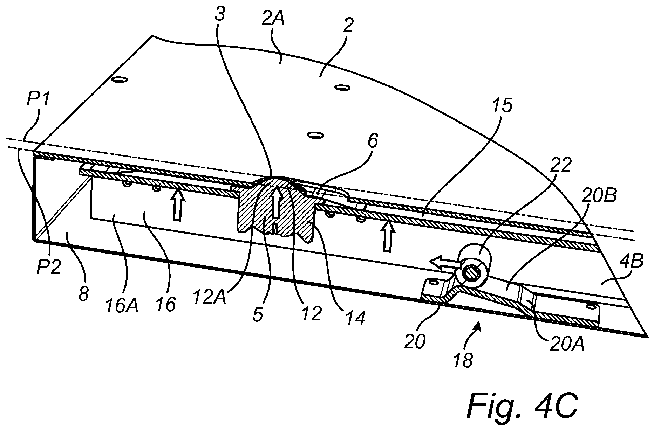

In Fig. 4C, the floor module 1 is in an activated state. That is, the beam 4 is in the second position. In the second position, the first plane P1 is arranged relative to the second plane P2 such that the load contact interface 12A of the rotatable body 12 is configured to engage with a load arranged on the floor module 1 for facilitating displacement of the load. In other words, the first plane P1 is arranged above the second plane P2. Hereby, the cover 6 allows the load contact interface 12A to traverse the through-hole 3 when the beam is moving between the first position and the second position.

The elevation element 20 may be provided with means for releasably retain the roller 22 in the second position of the beam 4. Additionally or alternatively, the actuator 7 may be configured to keep the beam 4 in the second position.

The actuator 7 may furthermore function like a weight sensor. For example, the energy consumed by the actuator 7 when bringing the floor module 1 from the deactivated state to the activated state may be correlated with the weight of any load arranged thereon. That is, the mass of a load may be determined.

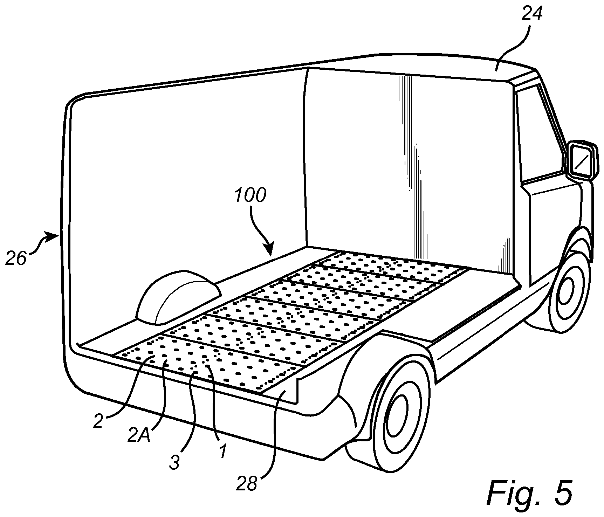

In Fig. 5, a road vehicle 24 comprising a floor system 100 for handling loads is shown. The floor system 100 comprises a plurality of floor modules 1. The floor system 100 is arranged in a cargo space 26 of the road vehicle 24. Here, the road vehicle 24 is light truck, such as a service vehicle. However, it is to be understood that a road vehicle may be any type of vehicle meant for use on roads, such as an automobile, a heavy truck, or a trailer configured to be attached to a truck.

The cargo space 26 of the road vehicle 1 is partially defined by an inner floor 28. The floor system 100 is arranged on the inner floor 28. The floor system 100 may comprise any number of floor modules 1, and the floor modules 1 may have any shape or dimension suitable for the cargo space 28. Consequently, the floor module coverage of the inner floor 28 may be varied.

Even though it is preferred that the floor module 1 is designed in accordance with the disclosure in the detailed disclosure of variants and the appended drawings, it should be noted that a specific variants of a specific component does not necessarily have to be combined with a specific embodiment of another component. Thus, advantages associated with a specific variant, including one or more features, of a specific component may be accomplished even though the other component(s) is/are designed in accordance with the more general disclosure under the summary of the disclosure rather than being defined in accordance with the specific variant disclosed in the detailed description. It is contemplated that there are numerous modifications of the variants described herein, which are still within the scope of the disclosure as defined by the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A floor module for a cargo space of a road vehicle, the floor module comprising:
at least one beam supporting a plurality of roll or ball transfer units discretely arranged along a longitudinal axis of the beam, each roll or ball transfer unit comprising a rotatable body, each rotatable body defining a respective load contact interface, wherein the load contact interfaces are arranged in a first plane; and
a floor unit, the floor unit extending substantially parallel with the longitudinal axis of the at least one beam and extending on both lateral sides of one beam of the at least one beam, wherein the floor unit forms a surface intended to face said cargo space of the road vehicle, the surface extending in a second plane;
wherein the at least one beam is movable relative the floor unit between a first position corresponding to a deactivated state of the floor module and a second position corresponding to an activated state of the floor module; and
wherein in the first position, the first plane is arranged relative to the second plane such that the surface of the floor unit is configured to support a load arranged on the floor module, and wherein in the second position, the first plane is arranged relative to the second plane such that at least some of the respective load contact interfaces of the rotatable bodies are configured to engage with a load arranged on the floor module for facilitating displacement of the load.

2. The floor module according to claim 1, wherein the at least one beam is movable between the first position and the second position by means of an actuator configured to apply a force on the at least one beam.

3. The floor module according to claim 2, wherein the at least one beam is reciprocally movable along the longitudinal axis thereof, wherein the floor module further comprises at least one elevation element, and wherein the actuator is configured to apply a force on the at least one beam acting along the longitudinal axis thereof so as to move the at least one beam along the longitudinal axis such that the at least one beam engages the at least one elevation element, thereby bringing the at least one beam between the first position and the second position.

4. The floor module according to claim 3, wherein each one of the at least one elevation element forms a respective inclined surface, and wherein the at least one beam is configured to engage each inclined surface.

5. The floor module according to claim 4, wherein each respective inclined surface has a non-linear shape.

6. The floor module according to any one of claims 3 to 5, wherein the at least one beam further comprises a top side and a bottom side, wherein the plurality of roll or ball transfer units is arranged in the top side and wherein the bottom side is arranged opposite the top side and is configured to engage the at least one elevation element.

7. The floor module according to claims 4 and 6 or 5 and 6, wherein the at least one elevation element is provided in the form of a ramp, wherein the ramp is provided with a receptacle for releasably retaining the bottom side in the activated state.

8. The floor module according to claim 6 or 7, wherein the bottom side is provided with at least one roller or wheel configured to engage a bottom section of the floor module or an inner floor of the cargo space of road vehicle.

9. The floor module according to claim 6 or 7, wherein the at least one beam is provided as a hollow body having an inverted U-shaped lateral cross-section having a web connected with a first and a second leg such that the bottom side is formed by a respective free end of the first and second leg.

10. The floor module according to claim 9, wherein the first and second leg form an accommodation space for accommodating the at least one elevation element and an engagement element configured to engage the inclined surface of the elevation element, the engagement element being provided in the first leg or the second leg.

11. The floor module according to claim 10 and 8, wherein the engagement element is provided in the form of a roller or a wheel.

12. The floor module according to any one of claims 7, 8 or 9, wherein the bottom side is provided with a cut-out, wherein the cut-out is configured to accommodate the elevation element in the deactivated state.

13. The floor module according to any one of the preceding claims, wherein the floor unit is provided with a plurality of through-holes, wherein the floor module further comprises a plurality of covers, each cover being connected to a respective one beam of the at least one beam and configured to cover a respective through-hole in the deactivated state of the floor module and configured to allow a respective load contact interface to traverse the through-hole when said beam is moving between the first position and the second position.

14. A floor system for a cargo space of a road vehicle, comprising a plurality of floor modules according to any one of the preceding claims.

15. A road vehicle comprising at least one floor module according to any one of claims 1-13.
